# EUROPEAN PATENT APPLICATION

(11) **EP 4 489 248 A2**
(43) Date of publication of application: **08.01.2025**
(21) Application number: 24186942.9
(22) Date of filing: 05.07.2024
(51) Int. Cl.: H02J 3/14, H02J 3/00, H02J 13/00, G05B 15/02, G06Q 50/06

(54) **ENERGY CONTROL AND PREDICTIVE MODEL OF BUILDING AUTOMATION SYSTEMS**

(30) Priority: 05.07.2023 US 202318347290
(71) Applicant: Trane International Inc., Davidson, NC 28036 (US)
(72) Inventor: DAYALAN, Udhaya Kumar, Lino Lakes, Minnesota, 55038 (US); MCKEEVER, James Kenneth, Blaine, Minnesota, 55449 (US); WENGER, Scott, Mooresville, North Carolina, 28117 (US)
(74) Representative: Haseltine Lake Kempner LLP

(57) **Abstract**

Method and systems for controlling electrical loads of a power source from a load facility are provided. The method includes determining a set of electrical loads, determining a set of conditions, predicting energy consumption using a machine learning model based on the set of electrical loads and the set of conditions, visualizing the energy consumption on a display device, and controlling the set of electrical loads under the set of conditions.

## Description

### FIELD

This disclosure relates generally to energy control of building automation systems. More specifically, the disclosure relates to systems and methods for energy control and predictive modeling of building automation systems, including e.g., using historical data and/or machine learning to determine participation in an event and to reduce the overall energy intensity of a facility by predicting the outcome of proposed curtailment actions.

### BACKGROUND

Building automation systems are used to coordinate, manage, and automate control of diverse environmental, physical, and electrical building subsystems, including heating, ventilation, air conditioning, and refrigeration (HVACR) systems and climate control which may also include security, lighting, power, and the like. An HVACR system may include e.g., a rooftop unit, etc. to provide conditioned air to e.g., an air distribution system that includes ductwork and/or any other suitable equipment and/or sub-systems. In HVACR systems, conditioned air is delivered to a building or occupied space. Air handlers or the air handler sections of an air conditioning unit for meeting the HVACR needs of a building often include a heat transfer circuit system housed within a sheet metal enclosure. The heat transfer circuit may include one or more compressors, a condenser, an evaporator, fans, filters, dampers, and various other equipment. The compressor(s), the condenser, the expansion device, and the evaporator are fluidly connected.

### SUMMARY

Features of the embodiments disclosed herein are directed to demand response, virtual power plant, and/or other applications designed to reduce energy intensity of a facility such as a building, a campus, a factory, etc. It is to be understood that while an air distribution system is provided as one of the examples, features of the embodiments disclosed herein can be applicable to a wide variety of HVACR equipment, systems, and/or sub-systems. Features of the embodiments disclosed herein can allow a user (e.g., an operator of the facility, etc.) to schedule participation in an event (e.g., a demand response event, an energy reduction event, an energy consumption event etc.), and/or to define the rules or conditions for application of one or more strategies or scenarios (e.g., curtailment strategies such as energy curtailment strategies, carbon dioxide curtailment strategies, etc.). Features of the embodiments disclosed herein can consider historical data (e.g., trend data of the electrical loads of the facility, etc.) and/or utilize a machine learning model to predict the outcome (e.g., energy consumption, carbon dioxide level or footprint, temperature, relative humidity, manufacturing capacity, etc.) and effectiveness of the available strategies or scenarios to select the best strategy or scenario. It is to be understood that the predicted outcome can include financial savings, risk to the comfort of occupant of the space in the facility, manufacturing process degradation, or the like.

Features of the embodiments disclosed herein can lower the overall energy intensity of the facility, thereby reducing the cost associated with the energy consumption while maximizing occupant comfort and/or manufacturing throughput pertaining to the cost savings.

Features of the embodiments disclosed herein can include scheduled participation in events such as the demand response events, scheduled application of energy reduction (or consumption) actions, and/or rule-based participation in both demand response events and energy reduction (or consumption) actions.

Features of the embodiments disclosed herein can also include the use of historical data (e.g., trend data of the electrical loads of the facility, etc.) and/or a machine learning model to predict the effectiveness of various strategies and/or scenarios, allowing the user to select from the available resources (e.g., electrical loads, etc.) to compare "what-if" scenarios, providing the visualization that allows users to compare various scenarios, and allowing the disclosed building automation system algorithm to automatically select from the available resources to maximize the benefits (e.g., of reducing energy consumption, reducing carbon dioxide level or footprint, etc.) and minimize the risks to the occupants and/or to the manufacturing processes.

Features of the embodiments disclosed herein can further include an algorithm that learns and/or continues to learn to make improved predictions and automated decisions, allowing the user to define the acceptable conditions for each resource and the combination thereof, and/or providing the user with the option of defining a preferential order (e.g., a priority level, etc.) for the application of each resource to the overall reduction (or consumption) strategy.

A building automation system for controlling electrical loads on a power grid from a load facility using demand response is provided. The system includes a controller and a memory configured to store a plurality of predetermined conditions. The controller is configured to receive a request of a demand response event, determine a plurality of current conditions, automatically participate in or opt out of the demand response event based on the current conditions and the predetermined conditions, and notify an operator responsible for the demand response event at least when the demand response event is opted out.

A method for controlling electrical loads of a power source from a load facility is provided. The method includes determining a set of electrical loads, determining a set of conditions, predicting energy consumption using a machine learning model based on the set of electrical loads and the set of conditions, visualizing the energy consumption on a display device, and controlling the set of electrical loads under the set of conditions.

A building automation system for controlling electrical loads of a power source from a load facility is provided. The system includes a controller and a memory configured to store a machine learning model. The controller is configured to determine a set of electrical loads, determine a set of conditions, predict energy consumption using the machine learning model based on the set of electrical loads and the set of conditions, visualize the energy consumption on a display device, and control the set of electrical loads under the set of conditions.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Non-limiting and non-exhaustive descriptions are described with reference to the following drawings. The components in the figures are not necessarily to scale, emphasis instead being placed upon illustrating principles. In the detailed description that follows, embodiments are described as illustrations only since various changes and modifications may become apparent to those skilled in the art from the following detailed description.
FIG. 1 illustrates a schematic diagram of a building automation system, according to an embodiment.
FIG. 2 illustrates a schematic diagram of a building automation system controller, according to an embodiment.
FIG. 3 illustrates a flow chart of a method for controlling electrical loads on a power grid from a load facility using demand response, according to an embodiment.
FIG. 4 illustrates a flow chart of a method for controlling electrical loads of a power source from a load facility, according to an embodiment.
FIG. 5 illustrates a user interface sequence of a method for controlling electrical loads of a power source from a load facility, according to another embodiment.

Like reference numbers represent like parts throughout.

### DETAILED DESCRIPTION

In the following detailed description, reference is made to the accompanying drawings, which form a part of the description. In the drawings, similar symbols typically identify similar components, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described herein and illustrated in the drawings, may be arranged, substituted, combined, separated, and designed in a wide variety of different configurations, all of which are explicitly contemplated herein.

It is to be understood that the disclosed embodiments are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Additionally, the present disclosure may be described herein in terms of functional block components and various processing steps. It should be appreciated that such functional blocks may be realized by any number of hardware and/or software components configured to perform the specified functions.

The scope of the disclosure should be determined by the appended claims and their legal equivalents, rather than by the examples given herein. For example, the steps recited in any method claims may be executed in any order and are not limited to the order presented in the claims. Moreover, no element is essential to the practice of the disclosure unless specifically described herein as "critical" or "essential."

As defined herein, the term "building automation system" or "BAS" may refer to a system used to coordinate, manage, and automate control of diverse environmental, physical, and electrical building subsystems, e.g., HVACR systems and climate control and which may also include security, lighting, power, and the like.

As defined herein, the term "demand response" may refer to a change in the power consumption of e.g., an electric utility customer to better match the demand for power with the supply. It will be appreciated that different embodiments of the demand response are described in U.S. Patent 11,677,239, which is hereby incorporated by reference in its entirely.

As defined herein, the term "virtual power plant" or "VPP" may refer to a power plant such as a distributed power plant or the like that aggregates the capacities of distributed energy resources for the purposes of e.g., enhancing power generation, trading or selling power on the electricity market, and/or demand side options for load reduction.

As defined herein, the term "load shedding" may refer to an action to reduce the load on a power source (e.g., a power grid, a power plant such as a virtual power plant, etc.), e.g., the interruption of an electricity supply, to avoid excessive load on the power generating plant. It is to be understood that load shedding can be used to relieve stress on a power source when the demand for electricity is greater than the power source can supply. It is also to be understood that a load facility may refer to a facility (e.g., a building, a factory, a campus, etc.) that includes a plurality of resources with respective amounts of electric power that are capable of e.g., being shed by the plurality of resources during an event such as a demand response event. For example, when a request of a demand response event or an energy reduction (or consumption) action is dispatched (e.g., from a power source such as a power grid, a VPP, etc.) to load facilities participating in a demand response or energy reduction (or consumption) program, the load facilities can respond (e.g., by load shedding such as turning off and/or reducing the power to one or more electrical loads, etc.) unless the users (e.g., the operator of the load facility, etc.) opt out of the demand response or energy reduction (or consumption) event.

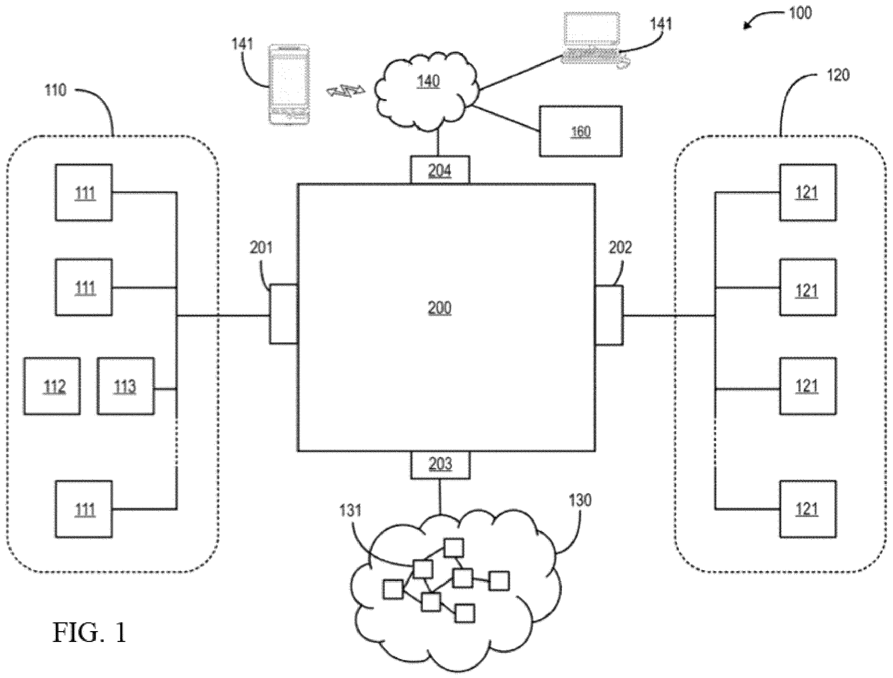

FIG. 1 illustrates a schematic diagram of a building automation system (BAS) 100, according to an embodiment. It is to be understood that in addition to its traditional capabilities, the BAS may require additional and/or specific sensors beyond those typically provided for equipment and/or building control. The BAS may also include machine learning algorithms, predictive models such as machine learning models, and/or the like, that can collect historical information, including the additional and/or specific sensors and the data measured or sensed by those sensors, to predict scenarios and outcomes. The BAS may further include cloud connectivity and/or provide remote access to the BAS, to extend the capabilities of the features in the embodiments disclosed herein.

In an embodiment, the BAS 100 includes a BAS controller 200 that is communicatively coupled with a number of building automation networks (BAN) 110, 120, 130. The BANs 110, 120, 130 may facilitate communication between BAS controller 200 and any number of BAS end devices 111, 112, 121, and 131. The end devices 111, 112, 121, and 131 may include e.g., a range of HVAC equipment such as chiller plants, chillers, air handlers, furnaces, or boilers with multiple data sensors producing a continuous stream of data, variable air volume boxes and dampers, temperature or humidity sensors monitoring a space, etc. In an embodiment, the end devices include a panel, a sensor, a controller, a microprocessor-controlled device, a converter, a thermostat, a furnace, a heating system, a chiller, a cooling system, an air conditioner, an air filter, an air purifier, a fire and life safety system, a security system, an alarm system, an occupancy sensor, an electrical system monitor and controller, a lighting system monitor and controller, a ventilation system monitor and controller, a smoke sensor, a light sensor, a motion sensor, a humidity sensor, a pump, an air handler, fluid and air moving and handling equipment, a terminal device, life science and pharmacological control equipment and monitoring systems, a positive pressure clean room, a negative pressure clean room, industrial automation and control equipment and systems, a programmable logic controller, etc.

The BAS controller 200 includes a communications interface 201 which couples the BAS controller 200 to a BAN 110. The BAN 110 includes a number of end devices 111 and end devices 112 coupled to the BAN 110 using e.g., a media converter 113. The end devices 111, 112, 121 can be e.g., chillers, air handlers, furnaces, boilers, variable air volume boxes, dampers, temperature or humidity sensors, and/or the like. The BAS controller 200 also includes a communications interface 202 which couples the BAS controller 200 to a BAN 120. The BAS controller 200 further includes a communications interface 203 which couples the BAS controller 200 to a BAN 130. The BAN 130 includes end devices 131 such as temperature sensors, humidity sensors, carbon dioxide sensors, etc. The BAS controller 200 also includes a data network interface 204 for communicating data to one or more user devices 141 over a data network 140, such as a private LAN and/or the public Internet. User devices 141 may include a mobile telephone, smart phone, tablet device, smart watch, pager, notebook computer, a desktop computer, etc. A remote server 160 is communicatively coupled to the BAS controller 200 via the data network 140 and stores information for a plurality of end devices, including information relating to specific products, product versions, firmware versions, and/or software versions.

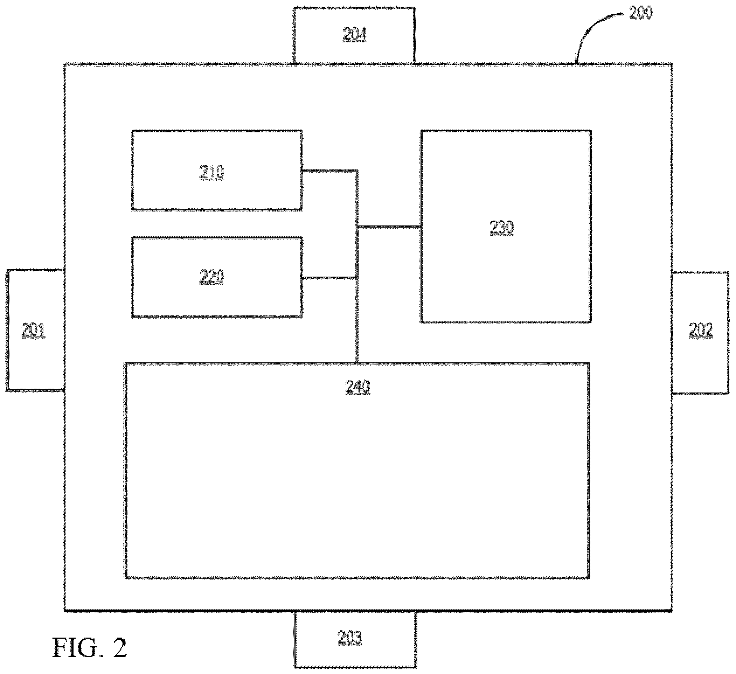

FIG. 2 illustrates a schematic diagram of a building automation system controller 200, according to an embodiment. The BAS controller 200 includes a processor 210 in operative communication with a memory 220, a user interface 230, and data storage 240. The memory 220 includes random-access memory which can be used, for example, for storage of transient data, computed and intermediate results, input/output buffering, graphical user interface buffering, program execution, and/or any other suitable purposes. Data storage 240 includes non-volatile storage such as a flash drive, electrically erasable programmable read-only memory, read-only memory, magnetic hard disk, solid state disk (SSD), hybrid drives (combination hard disk/SSD) which can be used for storage of data which persists through power cycling.

User interface 230 includes a number of elements which facilitate user input and the display of output to the user, and may include one or more of buttons, switches, light-emitting diode indicators, a character display such as a liquid crystal display or a vacuum fluorescent display, a graphic display such as a thin film transistor display, a touchscreen display, and/or the like.

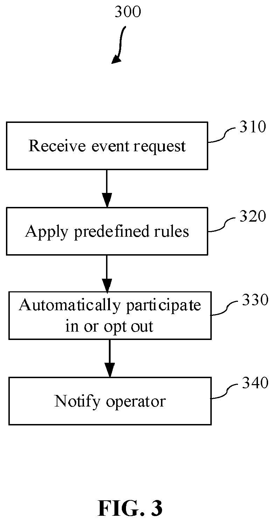

FIG. 3 illustrates a flow chart of a method 300 for controlling electrical loads on a power grid from a load facility using demand response, according to an embodiment.

It is to be understood that the processing flow 300 disclosed herein can be conducted by one or more controllers or processors including e.g., the controller 200 and/or the processor 210 of FIG. 2, any other suitable processor, and/or the combination thereof, unless otherwise specified.

It is also to be understood that the processing flow 300 can include one or more operations, actions, or functions as illustrated by one or more of blocks 310, 320, 330, and 340. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 300, operations including initializations or the like may be performed. For example, system parameters and/or application parameters may be initialized. Processing flow 300 may begin at block 310.

At block 310 (Receive event request), the controller (e.g., of the building automation system in a load facility, etc.) may receive a request of an event from a power source (e.g., a power grid, a power plant such as a virtual power plant, etc.). In an embodiment, the event can be a demand response event dispatched from the power grid, an energy reduction (or consumption) event from the power plant, etc. The event can include an amount of power to be reduced (or consumed), a duration (e.g., a period of time) of the power reduction or consumption, etc. The load facility can include a plurality of resources (e.g., electrical loads, etc.) with respective amounts of electric power that are capable of being shed (or consumed) by the plurality of resources during the event.

In an embodiment, when a request of an event is dispatched to load facilities participating in a demand response or energy reduction (or consumption) program, the load facilities (e.g., the controllers of the load facilities) may respond to the event unless the operators of the load facilities opt out of the called or requested event. In some demand response or energy reduction (or consumption) programs, the operators of the load facilities may be allotted a certain number of opt-outs over a period of time (e.g., a year, etc.), before the operators of the load facilities start to lose the incentives of participating in the program.

In an embodiment, resources (e.g., electrical loads, etc.) of the load facility may be assigned respective amounts of electric power that are capable of being shed (to reduce demand) or consumed (to increase demand) by the resources during the event. In the case of an event to reduce demand on the power grid or reduce energy consumption on a power plant, the controller may e.g., temporarily reduce or interrupt power consumption of the resources, shift power consumption of the resources to another period of time, and/or use onsite power generation or storage instead of the power grid or power plant. In the case of an event to increase demand on the power grid or increase energy consumption on a power plant, the controller may e.g., temporarily increase power consumption of the resources, shift power consumption of the resources from another period of time, enable or turn on additional resources, shift the efficiency of the resources to consume more power, and/or operate resources to generate energy (e.g., electrical, thermal) for onsite storage. Processing may proceed from block 310 to block 320.

At block 320 (Apply predefined rules), the controller may apply a plurality of predetermined rules or conditions to determine participation or opting out of the event. It is to be understood that features of embodiments disclosed herein provide the ability for the operator to define (e.g., predetermine, predefine, etc.) a set of rules or conditions that when being applied (e.g., being compared with current conditions, etc.), may result in a decision to e.g., participate in or opt out of a demand response or energy reduction (or consumption) program. In an embodiment, the predetermine rules or conditions may be stored in e.g., a memory.

In an embodiment, the controller may obtain or determine a set of current conditions (e.g., measurements, configurations, etc.), via e.g., sensors, equipment, electrical loads, etc. In an embodiment, the controller applying the predetermined rules or conditions may include comparing the current conditions to the predetermined rules or conditions. For example, the operator can define a set of rules that include that (1) if the current conditions (e.g., ambient conditions such as ambient temperature, ambient relative humidity, ambient pressure, ambient carbon dioxide level, etc.) satisfies the predetermined rules or conditions (e.g., exceeds a user-defined threshold in one embodiment, or is equal to or less than the threshold in another embodiment), that (2) there are sufficient electrical loads available to be shed in the load facility (e.g., the power requirement of the available electrical loads is greater than the power requirement of the request of the event), and/or that (3) the event is not significantly disruptive to the people and/or processes of the facility (e.g., after load shedding for the event, the electrical loads that are running at a full or partial capacity may provide sufficient or maximized comfort to the people e.g., to maintain sufficient temperature, relative humidity, carbon dioxide level, pressure, etc. and/or to provide sufficient power to the electrical loads used for the manufacturing process to maintain or maximize manufacturing throughput, etc.), then participation of the event can be automated without operator intervention. If the current conditions do not satisfy the predetermined set of rules or conditions, the opting out of the event can be automated without operator intervention. Processing may proceed from block 320 to block 330.

At block 330 (Automatically participate in or opt out), the controller may automatically determine participation or opting out of the event based on the applying or satisfying the plurality of predetermined rules or conditions at block 320.

In an embodiment, the predetermined set of rules or conditions can include a single rule or condition, a combination of rules or conditions, and/or customized rules or conditions that provide operators flexibility in controlling the resources of the facility, for proactively determining the participation or opting out of an event. It is to be understood that applying a predetermined rule or condition may include one or more parts, equations, and/or comparisons. For example, applying a predetermined rule may include comparing the number of people in all or parts of the facility (current condition) to a threshold (predetermined rule or condition), an ambient temperature (current condition) to a threshold, a humidity level or relative humidity level (current condition) to a threshold, a level of sunlight (current condition) to a threshold, a measurement of the manufacturing capacity (current condition) to a threshold, a measurement of machine loading (current condition) to a threshold, a measure of acceptable comfort for the building occupants (current condition) to a threshold, the amount of time since the load was shed in this event(current condition) to a threshold, the amount of time that has transpired since the last load shed event (current condition) to a threshold, etc. If a current condition exceeds the corresponding predetermined threshold (predetermined rule or condition) in one embodiment, or is equal to or less than the threshold in another embodiment, the controller can decide to automatically participate in the event without operator intervention; otherwise, the controller can decide to automatically opt out of the event without operator intervention.

In an embodiment, applying the predetermined set of rules or conditions can include satisfying the operator preference (or a priority level) for the order (e.g., from the highest priority level to the lowest priority level, from the lowest priority level to the highest priority level, etc.) in which resources are to be shed, etc., when e.g., the controller controls the resources for load shedding. If the predetermined set of rules or conditions are applied or satisfied, the controller can decide to automatically participate in (or opt out of) the event without operator intervention. For example, the controller can determine a set of electrical loads (i.e., which electrical loads may be selected for e.g., load shedding, etc.) based on a power requirement (e.g., how much power to be shed, etc.) of the event, a power requirement of each electrical load (e.g., how much power is needed to run the electrical load, etc.), and/or the priority level for each electrical load (e.g., the electrical load with the lowest priority level is to be selected or shed first or last, etc.).

In an embodiment, the controller can evaluate the current conditions of the facility, the calendar, and/or any other applicable measurements against the predetermined set of rules or conditions to determine the participation or opting out of the event.

In an embodiment, the predetermined set of rules or conditions can include a predetermined schedule. The operator and/or the controller can schedule participation or opting out of the event in advance of the actual notification or request. For example, in the months e.g., May through August (inclusive or exclusive), it may be known in advance that for a specific facility, manufacturing production may be much lighter than normal each Friday of the month. At that same facility, the number of office workers may be much less than normal due to the hybrid work options offered to the employees. In such embodiment, the operator and/or the controller may be able to schedule in advance participation in all summer/Friday events, since such participation may be minimal disruption to the business of such facility. In another example where the operator and/or the controller may know in advance that participation in an event may be very disruptive to the business of the facility, in which case the operator and/or the controller may prefer to automatically opt out before notification or request of the event. For example, in some businesses, the last week of the month may be very busy as the people and machines work in full capacity to meet quotas for the month, and thus participating in an event during such peak business operation may not be preferred.

It is to be understood that a predetermined schedule (e.g., specific day of a week of specific months, specific week of each month, etc.) may be stored in a memory. The controller may automatically participate in or opt out of the event when a current schedule (current day, current week, current period of time, etc.) satisfies the predetermined schedule (e.g., falls within the predetermined date and/or time).

It is to be understood that every time the controller automatically opts out of the event, an event counter (e.g., initialized as zero during system initialization, cleared after a predetermined period of time such as the contract time e.g., one year, etc. has passed) may be e.g., increased by one. When the event counter exceeds a predetermined threshold (e.g., four opt-outs, etc.), the incentives of participating in the event or program may be lost, and/or the controller is forced to automatically participate in the event until next contract period. The controller may notify the operator with an alert (e.g., via a display device, a sound, a light indicator, etc.) regarding the fact that (1) the event counter exceeds a predetermined threshold, (2) an event is requested, and/or that (3) the predetermined set of rules or conditions are satisfied in one embodiment or not satisfied in another embodiment (such that the controller is forced to automatically and/or fully or partially participate in the event). It is also to be understood that, the terms/clauses or contracts of some events or programs may allow partial participation in an event. That is, even when the full requirements of an event such as a demand reduction event cannot be satisfied due to various reasons, it may be possible to participate in, but at lower contributions (e.g., to the power reduction, to the power consumption, etc.) than the required amount. It may also be possible to aggregate contributions across multiple facilities to meet the requirements for power reduction or consumption.

It is to be understood that when participating in the event, the controller can control the resources (e.g., electrical loads, etc.) of the facility for load shedding e.g., by turning off or reducing power to one or more of the resources. Processing may proceed from block 330 to block 340.

At block 340 (Notify operator), the controller may notify the operator of the facility of the participation or opting out of the event and/or any suitable statistics, such as the number of times the operator and/or the controller has opted out of prior events, the timestamp of the events, etc. It is to be understood that for a demand response event or program, the operator and/or the controller is notified of an event and may respond to such notification by electing to opt in or opt out. Depending on the terms of the contract, the operator or controller's ability to opt out of the events may be limited. Features of embodiments disclosed herein can also apply to an event associated with power plants such as virtual power plants and the associated electrical loads. In some embodiments, it may be possible for the operator to override the decision made by the controller and/or the automated algorithm, either to participate in or opt out.

It is to be understood that even if the operators and/or the controller are not enrolled in formal demand response programs for the incentives associated with reducing demand upon request, they may be interested in reducing the energy intensity of their facilities for the financial and/or environmental benefits. As such, features of embodiments disclosed herein may be applied to demand response programs or events and/or to other events for reducing the electrical energy consumption. In such embodiments, the operators and/or the controllers may define the circumstances and sequences to reduce the total energy usage in a manner that optimizes the manufacturing processes, the comfort of the people in a space of the facility, and/or the cost of operating the facility.

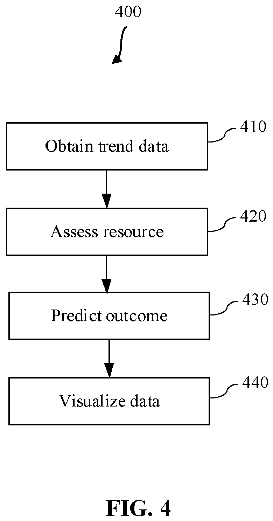

FIG. 4 illustrates a flow chart of a method 400 for controlling electrical loads of a power source from a load facility, according to an embodiment.

It is to be understood that the processing flow 400 disclosed herein can be conducted by one or more controllers or processors including e.g., the controller 200 and/or the processor 210 of FIG. 2, any other suitable processor, and/or the combination thereof, unless otherwise specified.

It is also to be understood that the processing flow 400 can include one or more operations, actions, or functions as illustrated by one or more of blocks 410, 420, 430, and 440. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 400, operations including initializations or the like may be performed. For example, system parameters and/or application parameters may be initialized. It is to be understood that features of embodiments disclosed herein apply to demand response application, virtual power plant application, and/or other suitable applications. Processing flow 400 may begin at block 410.

At block 410 (Obtain trend data), the controller may obtain or collect historical data (e.g., trend data, etc.) of e.g., the resources (e.g., electrical loads, etc.), the system (e.g., the building automation system), or the like. The trend data and/or the obtained trend data may be stored e.g., in a memory of the system, in a memory of a cloud, etc.

In an embodiment, the controller may obtain trend data for a selected set of resources (e.g., electrical loads, etc.) predetermined or inputted by a user via e.g., a user interface (e.g., a graphical user interface). See description of FIG. 4 for details. Processing may proceed from block 410 to block 420.

At block 420 (Assess resource), the controller may assess or evaluate the application of each of the selected resources and/or the combination thereof, based on the trend data of the selected resource(s) from block 410, to determine or predict (see block 430) the outcome, impact, or results of applying (e.g., in one embodiment turning off or reduce the power of, in another embodiment turning on or increasing the power to) the selected resource or a combination of selected resources. In an embodiment, the processing of block 420 can be combined with the processing of block 430. Processing may proceed from block 420 to block 430.

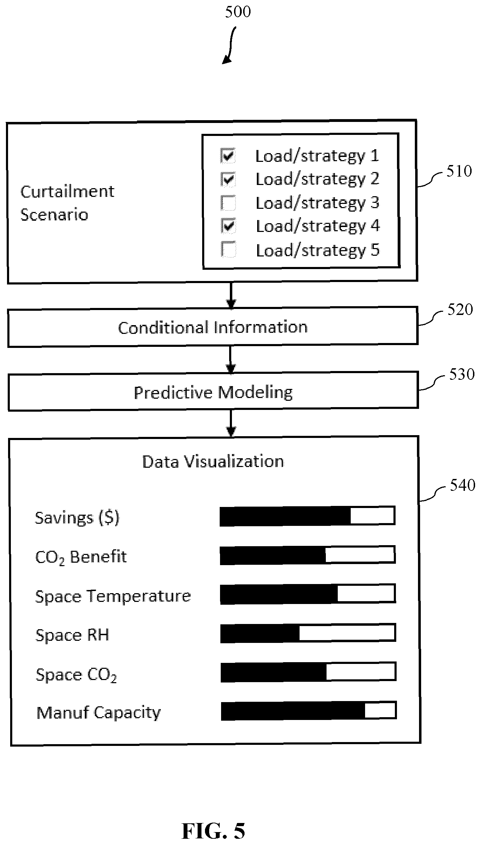

At block 430 (Predict outcome), the controller may determine, estimate, or predict the outcome, impact, and/or results (see description of FIG. 5 for details) based on the assessment of the application of the selected resource(s) from block 420. In an embodiment, the processing of block 420 and/or 430 can be implemented as a deterministic algorithm. In another embodiment, the processing of block 420 and/or 430 can be implemented as a stochastic algorithm such as a machine learning algorithm using e.g., a machine learning model.

In an embodiment, the controller may generate a predictive model such as a machine learning model (and store the generated model in a memory) for prediction of the energy consumption (and/or other outcome, impact, and/or results, see description of FIG. 5 for details). The controller may also train the machine learning model using training data such as the trend data of the resources of the facility. The controller may further deploy the trained machine learning model for prediction based on input data (e.g., newly selected or inputted resource(s), etc.), to predict the outcome, impact, and/or results of applying the input data. The controller may also obtain or collect new or additional trend data (e.g., from a memory of the system or in a cloud) of e.g., the resources, and/or re-train or fine-tuning the trained machine learning model based on the new or additional trend data. Processing may proceed from block 430 to block 440.

At block 440 (Visualize data), the controller may visualize the predicted outcome, impact, and/or results (see description of FIG. 5 for details) from block 430 e.g., on a display or user interface device (see the description of FIG. 2). In an embodiment, the controller may also visualize the trend data of the resource(s) e.g., on the display or user interface device.

It is to be understood that either as part of a formal demand response program or to reduce the energy intensity of the facility (or to increase power consumption in some embodiments), the operators and/or the controllers of the facility can select from the available electrical loads, scenarios, and/or strategies to curtail (or to increase) power consumption. Knowing in advance which strategies may be the most effective in the outcome, impact, and/or results (such as the reduction or increase of power consumption, etc.) of applying such electrical loads, scenarios, and/or strategies may be beneficial to the operators and/or the controllers to make an informed and/or balanced decision. In an embodiment, the predicted outcome, impact, and/or results can include e.g., savings prediction, prediction of the environment results, etc. Based on the historical trend data and using the predictive modeling, the controller can present the operators with information and visualization that predicts the effects on the processes and people in the building. See description of FIG. 5 for details.

It is also to be understood that features in the embodiments disclosed herein provide the capability to predict the benefits and outcomes of variable participation in a demand response, a power plant such as a virtual power plant, and/or other energy intensity reducing (or consuming) program, and/or track the historical outcome and savings realized (e.g., via the trend data). The trend data can be used in conjunction with a predictive model such as a machine learning model or other type of model to create or improve the prediction capability, and can be used to visualize the outcome to the operator. In an embodiment, the controller may visualize the energy intensity reducing measures taken over a configurable period of time, the resultant comfort and/or process parameters, the resultant cost savings, and/or the resultant reduction of the carbon dioxide equivalent emissions (e.g., by comparing the results with those of taking no action or no energy intensity reducing/consuming measure). In an embodiment, the controller can be used to create retroactive scenarios comparing actual results to configurable "what if' scenarios, focusing on "this is what would have happened" if the scenario is selected or configured for participating in the event.

FIG. 5 illustrates a user interface sequence 500 of a method for controlling electrical loads of a power source from a load facility, according to another embodiment.

It is to be understood that the user interface sequence 500 disclosed herein can be generated by one or more controllers or processors including e.g., the controller 200 and/or the processor 210 of FIG. 2, any other suitable processor, and/or the combination thereof, unless otherwise specified.

It is also to be understood that the user interface sequence 500 can include one or more interface, operations, actions, and/or functions as illustrated by one or more of blocks 510, 520, 530, and 540. These various interface, operations, functions, and/or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the user interface sequence 500, operations including initializations or the like may be performed. For example, system parameters and/or application parameters may be initialized. It is to be understood that features of embodiments disclosed herein apply to demand response application, virtual power plant application, and/or other suitable applications. The user interface sequence 500 may begin at block 510.

At block 510 (Curtailment Scenario), the controller may generate a user interface to (1) visualize curtailment or reduction scenarios or strategies (or a consumption scenarios or strategies in another embodiment), and to (2) facilitate the operator of the facility to select, choose, or input one or more electrical loads or strategies as e.g., a part of a scenario. It is to be understood that each of the scenarios or strategies may include a specific combination of one or more electrical loads of the facility, the corresponding configurations (e.g., setpoints, upper and/or lower limits, configurable parameters, thresholds, settings, etc.) of the electrical loads, and/or other necessary equipment and configurations. For example, as shown in block/interface 510, from the five predetermined curtailment strategies, the operator may select three for evaluation or assessment - indicated by the check-box selectors (or any other suitable selectors) in front of each option.

In an embodiment, the controller may also provide a mechanism for the operator to confirm the selection, choice, or input of the one or more electrical loads or strategies or scenarios, and/or to proceed to the next step or the next user interface. The user interface sequence may proceed from block 510 to block 520.

At block 520 (Conditional Information), the controller may generate a user interface to (1) visualize the conditional information, and to (2) facilitate the operator of the facility to select, choose, or input one or more conditional information such as the day or date to be evaluated, the ambient weather conditions (temperature, relative humidity, carbon dioxide level, etc.), the expected occupancy (e.g., number of people, etc.) of the facility, the planned manufacturing capacity (which may include information such as the amount of power/energy and/or the number of people required to satisfy such capacity, etc.), a forecast of the cloud cover, and/or any other suitable factors that may contribute to the overall effectiveness of the strategy selected at block 510.

In an embodiment, the controller may also provide a mechanism for the operator to confirm the selection, choice, or input of the one or more conditional information, and/or to proceed to the next step or the next user interface. The user interface sequence may proceed from block 520 to block 530.

At block 530 (Predictive Modeling), the controller may generate an optional user interface to (1) visualize the predictive model (e.g., a trained machine learning model, an untrained machine learning model, etc.), and to (2) facilitate the operator of the facility to run the predictive model to predict the outcome of the selected scenario (e.g., the selected electrical loads or strategies, etc.) at block 510 with the conditional information provided at block 520, as the input to the predictive model, e.g., for participating in the event. In an embodiment, the controller may have already trained the predictive model using the historical data and/or historical scenario effectiveness (i.e., the trend data of the scenario, etc.). In such embodiment, the controller may run or perform the trained predictive model, using the selected scenario (e.g., the selected electrical loads or strategies, etc.) at block 510 with the conditional information provided at block 520 as the input to the predictive model, to predict the outcome of the selected scenario with the conditional information provided, e.g., for participating in the event. In another embodiment, the controller may provide the trend data of the scenario, along with the selected scenario and the conditional information as input to the predictive model (e.g., untrained model, deterministic algorithms, etc.), to run or perform the predictive model to predict the outcome of the selected scenario with the conditional information provided, e.g., for participating in the event.

In an embodiment, the controller may also provide a mechanism for the operator to run or perform the predictive model, and/or to proceed to the next step or the next user interface The user interface sequence may proceed from block 530 to block 540. In the case where the block/interface 530 is optional, the user interface sequence may proceed from block 520 to block 540.

At block 540 (Data Visualization), the controller may generate a user interface to (1) visualize a summary and/or the overall impact of the selected scenario with the conditional information, according to several key performance indicators, e.g., for participating in the event, and to (2) facilitate the operator of the facility to view, review, and/or compare outcomes of different scenarios. In an embodiment, the controller may also generate a user interface to (1) visualize the trend data of the selected electrical loads, e.g., for participating in the past events, to (2) facilitate the operator of the facility to view, review, and/or compare different trend data of the selected electrical loads.

In an embodiment, the performance indicators (i.e., the outcome, impact, or results of the prediction from block 530) can include e.g., cost savings (for participating in the event), a carbon dioxide benefit (compared with taking no action regarding the event), a space temperature, a space relative humidity, a space carbon dioxide level, and/or a manufacturing capacity, etc. e.g., for participating in the event.

It is to be understood that the controller may generate a user interface (not shown) to facilitate the operator of the facility to select, choose, or input the preferred scenario as the final configuration e.g., for participating in the event (e.g., the demand response event, the energy reduction or consumption event of a virtual power plant, and/or any other suitable event). The controller may also generate a user interface (not shown) to facilitate the operator of the facility to control the preferred scenario (e.g., to control the electrical loads in the preferred scenario e.g., for load shedding by turning off or reducing power to one or more of the electrical loads, etc.).

In an embodiment, one or more of the equipment of the HVACR system can be an electrical load or electrical loads. It is to be understood that an HVACR equipment can be turned down (e.g., by reducing capacity, etc.) or turned off to reduce e.g., power or energy consumption, but occupant comfort may become a concern. Similarly, the reduction strategies (e.g., power, energy, carbon dioxide level, etc.) may have the potential of affecting the business process, such as the manufacturing and/or production throughput. The predictive capabilities of the building automation system can use e.g., historical data to forecast the impact of each scenario on the people and processes in the facility. Features in the embodiments disclosed herein can help operators of the facilities to select from the available electrical loads and/or scenarios to maximize cost savings while minimizing the impact on their facility, when participating in (or opting out of) the events.

It is also to be understood that combined with the historical and predictive capabilities of the demand or event management functionality in the building automation system, operators and/or controllers can define the limits within which the electrical loads and/or strategies may be applied when participating in (or opting out of) the events. In an embodiment, the controller can, as curtailment is initiated and managed for energy reduction, monitor the resulting conditions or outcomes. The operator and/or the controller can define the acceptable boundaries for curtailment and the controller can shift the application of electrical loads and/or strategies accordingly e.g., among the available electrical loads and/or strategies.

For example, in an embodiment, given one of the reduction strategies to be relaxing the space temperature heating and cooling setpoints in each space of an occupied building, when participating in an event. Depending on the specific application, such change (i.e., the relaxing) may result in overall cost savings, but may put at risk occupant comfort. In such embodiment, the operator and/or the controller can define the limits at which this specific action (i.e., the relaxing, or the participating in the event, etc.) may be released in lieu of a different strategy or electrical load. For example, the change in space temperature may limit the terminal equipment in each space from maintaining comfortable conditions. As the temperature and/or humidity rises above a user-defined threshold in the spaces, the controller may release the temporary action on the active setpoint and instead take a different action to reduce energy. Such automated change (i.e., releasing the control of some electrical loads for load shedding, and/or selecting other electrical loads to control for load shedding, etc.) may allow the building automation system to regain control of the space conditions while maximizing the overall reduction of energy usage.

That is, e.g., when a current condition (e.g., the temperature, the humidity, etc.) exceeds a threshold, the controller may release the control of the first set of resources (that are selected for participating in the event, e.g., for load shedding), select a second set of resources from the available resources, and control the second set of resources e.g., for load shedding.

In an embodiment, a priority level (e.g., stored in a memory) can be provided for each of the scenarios, for each of the electrical loads, and/or each operating/operation limit or thresholds. The operator can define the prioritization of all available electrical loads and/or strategies as well as the operating limits for each electrical load and/or strategy during curtailment. In such embodiment, the controller can apply each electrical load and/or strategy while rotating the electrical loads and/or strategies accordingly, when a specific electrical load and/or strategy may result in conditions that fall outside of the acceptable user-defined window or threshold. For example, the operator and/or the controller can define the acceptable space comfort conditions outside of which the associated electrical load reduction strategies may be released in favor of other options. Similar limitations can be placed on other reduction strategies to ensure that the people and processes in the facility are held within acceptable limits. That is, e.g., when a current condition (e.g., the temperature, the humidity, etc.) exceeds a threshold, the controller may release the control of the first set of resources (that are selected for participating in the event, e.g., for load shedding), and rotate the control within or among the available resources and/or strategies (e.g., selecting the second set of resources, controlling the second set of resources e.g., for load shedding, and then releasing the control of the second set of resources, selecting the third set of resources, controlling the third set of resources e.g., for load shedding, and so on, whenever a current conditions falls outside of the acceptable user-defined threshold).

It is to be understood that the disclosed and other solutions, examples, embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., a field programmable gate array, an application specific integrated circuit, or the like.

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., erasable programmable read-only memory, electrically erasable programmable read-only memory, and flash memory devices; magnetic disks, e.g., internal hard disks or removable disks; magneto optical disks; and compact disc read-only memory and digital video disc read-only memory disks. The processor and the memory can be supplemented by, or incorporated in, special purpose logic circuitry.

It is to be understood that different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

### Aspects:

It is appreciated that any one of the aspects can be combined with each other.
Aspect 1. A building automation system for controlling electrical loads on a power grid from a load facility using demand response, the system comprising:
   a memory configured to store a plurality of predetermined conditions; and
   a controller;
   wherein the controller is configured to:
      receive a request of a demand response event,
      determine a plurality of current conditions,
      automatically participate in or opt out of the demand response event based on the current conditions and the predetermined conditions, and
      notify an operator responsible for the demand response event at least when the demand response event is opted out.
Aspect 2. The system according to aspect 1, wherein the predetermined conditions include a first threshold, the current conditions include a first condition, the controller is further configured to:
   automatically participate in the demand response event when the first condition is equal to or less than the first threshold, and
   control a set of electrical loads for load shedding.
Aspect 3. The system according to aspect 2, wherein the memory is further configured to store an opt-out counter and an opt-out threshold, the controller is further configured to:
   automatically opt out of the demand response event when the first condition is greater than the first threshold and when the opt-out counter is equal to or less than the opt-out threshold; and
   increase the opt-out counter.
Aspect 4. The system according to aspect 3, wherein the controller is further configured to:
   automatically participate in the demand response event when the opt-out counter is greater than the opt-out threshold,
   control the set of electrical loads for load shedding, and
   notify the operator with an alert.
Aspect 5. The system according to any one of aspects 1-4, wherein the memory is further configured to store a predetermined schedule, the controller is further configured to:
   automatically participate in the demand response event when a current schedule satisfies the predetermined schedule.
Aspect 6. The system according to any one of aspects 1-5, wherein the memory is further configured to store a predetermined schedule, the controller is further configured to:
   automatically opt out of the demand response event when a current schedule satisfies the predetermined schedule.
Aspect 7. The system according to any one of aspects 1-6, wherein the memory is further configured to store a priority level for each electrical load, the controller is further configured to:
   determine a set of electrical loads based on a power requirement of the demand response event, a power requirement of each electrical load, and the priority level for each electrical load; and
   control the determined set of electrical loads for load shedding when the demand response event is participated in.
Aspect 8. A method for controlling electrical loads of a power source from a load facility, the method comprising:
   determining a set of electrical loads;
   determining a set of conditions;
   predicting energy consumption using a machine learning model based on the set of electrical loads and the set of conditions;
   visualizing the energy consumption on a display device; and
   controlling the set of electrical loads under the set of conditions.
Aspect 9. The method according to aspect 8, further comprising:
   obtaining a set of trend data of the set of electrical loads;
   training the machine learning model using the set of trend data; and
   deploying the trained machine learning model for prediction of the energy consumption.
Aspect 10. The method according to aspect 9, further comprising:
   visualizing the trend data on the display device.
Aspect 11. The method according to any one of aspects 8-10, wherein the visualizing of the energy consumption on the display device includes visualizing cost savings, a carbon dioxide benefit, a space temperature, a space relative humidity, a space carbon dioxide level, and a manufacturing capacity correspond to the predicted energy consumption.
Aspect 12. The method according to any one of aspects 8-11, further comprising:
   determining a set of energy reduction scenarios;
   predicting energy reduction for the energy reduction scenarios using the machine learning model; and
   comparing the energy reduction for each of the energy reduction scenarios and selecting a first energy reduction scenario among the energy reduction scenarios based on the comparison.
Aspect 13. The method according to aspect 12, wherein a priority level is provided for each of the energy reduction scenarios, the first energy reduction scenario has a highest priority level among the energy reduction scenarios.
Aspect 14. The method according to any one of aspects 8-13, wherein a priority level is provided for each of the electrical loads.
Aspect 15. The method according to any one of aspects 12-14, wherein the first energy reduction scenario includes the set of electrical loads and the set of conditions.
Aspect 16. The method according to aspect 15, wherein the set of conditions includes a first condition, the method further comprising:
   releasing control of resources in the first energy reduction scenario; and
   selecting a second energy reduction scenario among the energy reduction scenarios when the first condition exceeds a first threshold; and
   controlling resources in the second energy reduction scenario.
Aspect 17. The method according to aspect 15 or aspect 16, wherein the set of conditions includes a first condition, the method further comprising:
   rotating control in the energy reduction scenarios when the first condition exceeds a first threshold.
Aspect 18. The method according to any one of aspects 8-17, wherein the controlling of the set of electrical loads includes turning off or reducing power to one or more of the electrical loads.
Aspect 19. A building automation system for controlling electrical loads of a power source from a load facility, the system comprising:
   a memory configured to store a machine learning model (e.g., storing a machine learning model); and
   a controller;
   wherein the controller is configured to:
      determine a set of electrical loads;
      determine a set of conditions;
      predict energy consumption using the machine learning model based on the set of electrical loads and the set of conditions;
      visualize the energy consumption on a display device; and
      control the set of electrical loads under the set of conditions.
Aspect 20. The system according to aspect 19, wherein the controller is further configured to:
   obtain a set of trend data of the set of electrical loads;
   train the machine learning model using the set of trend data;
   deploy the trained machine learning model for prediction of the energy consumption.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This specification and the embodiments described are exemplary only, with the true scope and spirit of the disclosure being indicated by the claims that follow.

## Claims

1. A building automation system for controlling electrical loads on a power grid from a load facility using demand response, the system comprising:
a memory configured to store a plurality of predetermined conditions; and
a controller;
wherein the controller is configured to:
receive a request of a demand response event,
determine a plurality of current conditions,
automatically participate in or opt out of the demand response event based on the current conditions and the predetermined conditions, and
notify an operator responsible for the demand response event at least when the demand response event is opted out.

2. The system according to claim 1, wherein the predetermined conditions include a first threshold, the current conditions include a first condition, the controller is further configured to:
automatically participate in the demand response event when the first condition is equal to or less than the first threshold, and
control a set of electrical loads for load shedding.

3. The system according to claim 2, wherein the memory is further configured to store an opt-out counter and an opt-out threshold, the controller is further configured to:
automatically opt out of the demand response event when the first condition is greater than the first threshold and when the opt-out counter is equal to or less than the opt-out threshold; and
increase the opt-out counter.

4. The system according to claim 3, wherein the controller is further configured to:
automatically participate in the demand response event when the opt-out counter is greater than the opt-out threshold,
control the set of electrical loads for load shedding, and
notify the operator with an alert.

5. The system according to any one of claims 1-4, wherein the memory is further configured to store a predetermined schedule, and
wherein the controller is further configured to automatically participate in the demand response event when a current schedule satisfies the predetermined schedule; or
automatically opt out of the demand response event when a current schedule satisfies the predetermined schedule.

6. The system according to any one of claims 1-5, wherein the memory is further configured to store a priority level for each electrical load, the controller is further configured to:
determine a set of electrical loads based on a power requirement of the demand response event, a power requirement of each electrical load, and the priority level for each electrical load; and
control the determined set of electrical loads for load shedding when the demand response event is participated in.

7. A method for controlling electrical loads of a power source from a load facility, the method comprising:
determining a set of electrical loads;
determining a set of conditions;
predicting energy consumption using a machine learning model based on the set of electrical loads and the set of conditions;
visualizing the energy consumption on a display device; and
controlling the set of electrical loads under the set of conditions.

8. The method according to claim 7, further comprising:
obtaining a set of trend data of the set of electrical loads;
training the machine learning model using the set of trend data; and
deploying the trained machine learning model for prediction of the energy consumption.

9. The method according to any one of claims 7-8, further comprising:
determining a set of energy reduction scenarios;
predicting energy reduction for the energy reduction scenarios using the machine learning model; and
comparing the energy reduction for each of the energy reduction scenarios and selecting a first energy reduction scenario among the energy reduction scenarios based on the comparison.

10. The method according to claim 9, wherein a priority level is provided for each of the electrical loads; or
a priority level is provided for each of the energy reduction scenarios, and the first energy reduction scenario has a highest priority level among the energy reduction scenarios.

11. The method according to claim 9 or 10, wherein the first energy reduction scenario includes the set of electrical loads and the set of conditions.

12. The method according to claim 11, wherein the set of conditions includes a first condition, the method further comprising:
releasing control of resources in the first energy reduction scenario;
selecting a second energy reduction scenario among the energy reduction scenarios when the first condition exceeds a first threshold; and
controlling resources in the second energy reduction scenario.

13. The method according to claim 11, wherein the set of conditions includes a first condition, the method further comprising: rotating control in the energy reduction scenarios when the first condition exceeds a first threshold.

14. The method according to any one of claims 7-13, wherein the controlling of the set of electrical loads includes turning off or reducing power to one or more of the electrical loads.

15. A building automation system for controlling electrical loads of a power source from a load facility, the system comprising:
a memory configured to store a machine learning model; and
a controller;
wherein the controller is configured to:
determine a set of electrical loads;
determine a set of conditions;
predict energy consumption using the machine learning model based on the set of electrical loads and the set of conditions;
visualize the energy consumption on a display device; and
control the set of electrical loads under the set of conditions.
